Europäisches Patentamt

European Patent Office

Office européen des brevets

(19)

(11) Publication number: **0 334 591**
**A1**

(12) # EUROPEAN PATENT APPLICATION

(21) Application number: **89302776.3**

(22) Date of filing: **21.03.89**

(51) Int. Cl.⁴: **C 08 F 218/08**
**C 08 F 214/06**
**//(C08F218/08,214:04,210:02,**
**220:18),(C08F214/06,218:08,**
**210:02,220:18)**

(30) Priority: **22.03.88 GB 8806775**

(43) Date of publication of application:
**27.09.89 Bulletin 89/39**

(84) Designated Contracting States:
**AT BE CH DE ES FR GB GR IT LI NL SE**

(71) Applicant: **UNILEVER PLC**
**Unilever House Blackfriars**
**London EC4P 4BQ (GB)**

(84) Designated Contracting States: **GB**

(71) Applicant: **UNILEVER NV**
**Burgemeester s'Jacobplein 1 P.O. Box 760**
**NL-3000 DK Rotterdam (NL)**

(84) Designated Contracting States:
**BE CH DE ES FR GR IT LI NL SE AT**

(72) Inventor: **Clark, Nigel Leslie**
**70 Wilmot Way**
**Banstead Surrey (GB)**

(74) Representative: **Litherland, Donald**
**UNILEVER PLC Patents Division P.O. Box 68 Unilever**
**House**
**London EC4P 4BQ (GB)**

(54) **Modified terpolymer emulsions.**

(57) Paint base compositions exhibiting improved performance in the absence of sodium vinyl sulphonate comprise emulsion copolymers of vinyl C1 to C4 alkanoates eg. vinyl acetate, vinyl chloride and an alkylene eg. ethylene, with alkyl acrylate.

EP 0 334 591 A1

**Description**

## MODIFIED TERPOLYMER EMULSIONS

Field of the invention:

This invention relates to copolymer compositions in emulsion form comprising vinyl C1 to C4 alkanoates eg. vinyl acetate, vinyl chloride and an alkylene component eg. ethylene as the principal monomer components. Copolymer emulsions of this class are usable as bases for surface coatings, for example paints.

Background of the invention:

Copolymers of this class are usable in a variety of applications dependent on the ratios of the monomers selected. Utilities include paints and other surface coatings intended for internal and external applications. These copolymers are required to have certain properties to perform well in these surface coating applications, as for example, the copolymers must have satisfactory tensile strength, elongation and water uptake.

General description:

The invention provides copolymers of vinyl C1 to C4 alkanoates eg. vinyl acetate, vinyl chloride and an alkylene eg. ethylene, which are modified by the inclusion in the monomer charge from which it is prepared, of alkyl (C2 to C12) (meth)acrylate, usually at a level of at least 2% and up to 20% by weight. Preferably the alkyl (meth)acrylate contains at least 4 carbon atoms and usually up to 10 carbon atoms in the alkyl group. Examples of these modifying (meth)acrylates are butyl, hexyl, octyl and 2-ethyl hexyl acrylate and methacrylate. Although vinyl acetate is a preferred vinyl alkanoate, other vinyl esters within the class defined are useable in particular vinyl formate, propionate, butyrate and isobutyrate.

Such copolymers may be prepared as an aqueous emulsion from a suitable emulsified monomer charge under ethylene pressure in the presence of a stabilising emulsifier system.

These terpolymer emulsions may be incorporated into water based compositions, together with other conventional ingredients, in such surface coating applications as paints and other surface coatings intended for internal and external applications, for which the plastic film provided by the copolymer dispersion is required to provide protection in particular against the effects of atmospheric deterioration and also provide resistance against abrasion. The film is therefore required to meet stringent requirements including in particular, flexibility to provide resistance against cracking and abrasion, reflected in adequate elongation and tensile strength both wet and dry, together with limited water uptake.

It has now been found that these properties may be adversely affected by the presence in the copolymer of components normally included to promote polymerisation or of aids for other purposes.

Specific description of the invention:

The present invention therefore provides a surface coating base comprising an aqueous emulsion of a copolymer of a vinyl C1 to C4 alkanoate, vinyl chloride and an alkalene eg. ethylene, the monomer charge from which the terpolymer is prepared also including a proportion of an alkyl acrylate, wherein the copolymer is substantially free from sodium vinyl sulphonate and its polymerised derivatives and preferably also from free (meth)acrylic acid.

The invention also provides a process for the preparation of copolymers of vinyl acetate, vinyl chloride and ethylene comprising polymerising a monomer charge including alkyl acrylate, preferably under superatmospheric ethylene pressure, preferably in an aqueous phase in which the monomer charge is dispersed and polymerised in an emulsion in the presence of minor amounts of components for promoting polymerisation and an emulsifier system, characterised in that the monomer charge is free from sodium vinyl sulphonate and preferably also from free acrylic acids.

Prior Art:

GB 1551415 discloses the use of alkyl methacrylate in the preparation of copolymers. Japanese patent specification 32787/74 discloses the use of longer chain alkyl groups in the acrylates, for the production of terpolymer emulsions suitable for use in paints. In the process described in this latter specification, sodium vinyl sulphonate is used in an amount from 0.1 to 3%.

The adverse effect produced by the presence of sodium vinyl sulphonate in polymer films of the kind described, is particularly pronounced in copolymers which include a proportion of alkyl acrylates in the monomer charge from which the polymers are prepared. Preferably, the alkyl acrylates are present in an amount from 1 to 40% by weight of the monomer charge, more preferably at least 2% and in particular from 2 to 20% by weight of the monomer charge. Of the principal ingredients comprising the copolymer of the present invention, vinyl acetate is preferably present in an amount of 10 to 90 parts and more particularly 30 to 80 parts, vinyl chloride from 5 to 50 and more particularly from 10 to 40 parts by weight and ethylene from 5 to 40 and more particularly 10 to 30 parts by weight of the monomer charge from which the copolymer is prepared.

The alkyl acrylate preferably contains at least 4 carbon atoms and more particularly up to 10 carbon atoms in the alkyl group. Examples include butyl, hexyl, octyl and 2-ethyl hexyl acrylates and methacrylates. The copolymer may also include minor amounts of monomer components included to provide specific benefits including acrylic and methacrylic acid and derivatives thereof and hydroxy functional acrylates, but these are preferably absent.

There is a general requirement to improve the properties of the copolymers of the invention to ensure they are suitable for long term external use and the modification described provides improvement in the desired properties.

There is no criticality in the process used to prepare the modified copolymers provided no sodium vinyl sulphonate is present in the monomer charge and/or incorporated in the polymer structure. Preferably however the copolymers of the present invention are prepared in accordance with the method described in EP 0255363, wherein a polymerisation initiator system is added with part of the monomer charge to the remainder in a reaction medium at a rate at which a reservoir of the monomer remains in the reaction medium.

Example

An example of the copolymer will now be given to illustrate but not limit the invention, for comparison with a Control in which sodium vinyl sulphonate was included in the monomer composition.

A Control copolymer comprising a monomer component composition of:-

| Vinyl acetate | 926.5 g |
| Vinyl chloride | 425 g |
| 2-ethyl hexyl acrylate | 85 g |
| Ethylene | 255 g |

was prepared by the following process:- An aqueous solution with the composition listed below was prepared and loaded into a pressure reactor (3.7 litres capacity).

| Hydroxy ethyl cellulose* | 17 g |
| Anionic surfactant (75% aq)** | 45.4 g |
| Sodium vinyl sulphonate | 8.5 g |
| Ferric chloride | 0.017 g |
| Distilled water | to 52% non-volatile content |
| Formic acid | 1ml.(to give pH 3 to 3.5) |

* obtained from Hercules Ltd of London, England
under the trade name Natrosol 250LR
** obtained from Lankro Chemicals Ltd of
Manchester, England under the trade name
Perlankrol RN75

The reactor was flushed first with nitrogen and then with ethylene. The agitator was then started, the vessel contents heated to 30°C and the whole of the ethylene component introduced into the vessel to give a pressure of 55 bars.

5% by weight of each of the vinyl acetate, vinyl chloride and 2-ethyl hexyl acrylate monomers were added at this stage to form an initial monomer charge.

Initiator solutions having the compositions

A.

| Sodium persulphate | 6.8 g |
| Sodium bicarbonate | 5.1 g |
| Distilled water | 170 g |

B.

| Sodium formaldehyde sulphoxylate | 3.4 g |
| Distilled water | 170 g |

had been previously prepared and 10% of each solution added to the vessel containing the 5% monomer charge, the temperature of which was allowed to rise as the initial monomer charge polymerised. 15 minutes after the addition of the initiator solutions the remaining 95% of the monomer components was added continuously over a period of 4 hours. The addition of the remaining 90% of the initiator solutions was commenced together with the monomer components, but the initiator solutions were added continuously over a period of 5 hours. The temperature was maintained at 60°C during these additions of monomers and initiators with continuing agitation.

At the end of the 5 hour period the reaction mass was cooled to ambient temperature while adding final stage initiator solutions C & D over a period of 0.5 hour.

C.

| t-butyl hydroperoxide (10% solution) | 5.1 g |
| sodium bicarbonate | 1.7 g |
| distilled water | 34 g |

D.

| Sodium metabisulphite | 5.1 g |
| distilled water | 34 g |

After completion of the reaction the modified copolymer emulsion was tested for tensile strength (wet and dry), elongation (wet and dry) and water uptake.

The test measurements obtained are compared in the Table with those obtained with a terpolymer prepared as described previously but with a total monomer charge of:

| Vinyl acetate | 960.5 g |
| Vinyl chloride | 425 g |
| Ethylene | 306 g |

The proportions of the terpolymer monomers were varied to ensure both terpolymers had similar glass transition temperatures.

Both the above preparations were related in the absence of sodium vinyl sulphate from the aqueous charge. The tests were repeated in each case and appear in the Table.

A continuous film of polymer was prepared by applying a film of emulsion of 0.1 mm thickness to a PTFE coated glass plate and drying the film for 7 days at 20°C. After this period specimens were cut from it for the tests. Tensile strength and Elongation were measured using an Instron tensometer at an extension rate of 50 mm per minute at 20°C. Wet tensile strength and elongation measurements were performed on polymer films after immersion in water at 20°C for 24 hours. The results obtained were indexed to provide a Toughness unit, calculated by integration of the curve Tensile Strength/Elongation, in Newton meters/cm$^2$; the index values therefore provide a comparison of the work required to break the polymer film.

Water uptake was measured as the percentage weight increase of terpolymer film samples after immersion in water at 20°C.

Results appear in the accompanying Table; figures in parentheses are for Control tests with SVS present in the polymer.

TABLE

| | Dry | Wet | Water uptake % | |
| | | | 1 Day | 7 Days |
|---|---|---|---|---|
| Terpolymer | 0.9(1.0) | 0.5(0.3) | 31(30) | 45(99) |
| Acrylic do. | 0.5(0.5) | 0.8(0.4) | 17(35) | 18(52) |

The results indicate that no significant benefit is conferred by the presence of SVS, either on the terpolymer or the acrylic polymer, but that on the contrary wet strength is markedly weakened by the presence of this component and water uptake greatly increased after one day.

## Claims

1. A surface coating base composition comprising an aqueous emulsion of a copolymer of a vinyl C1 to C4 alkanoate, vinyl chloride and an alkylene component substantially free from sodium vinyl sulphonate and its polymerised derivatives the monomer charge also including a proportion of an alkyl acrylate.

2. Composition according to claim 1 wherein the composition of the terpolymer corresponds with 10 to 90 parts of vinyl acetate, 5 to 50 parts vinyl chloride and 5 to 40 parts ethylene by weight of the monomer charge.

3. Composition according to claim 1 wherein the composition of the terpolymer corresponds with 30 to 80 parts vinyl acetate, 10 to 40 parts vinyl chloride and 10 to 30 parts ethylene by weight of the monomer charge.

4. Composition according to Claim 2 wherein the compositin of the terpolymer corresponds with 60 to 90 parts vinyl acetate, and 5 to 20 parts ethylene by weight of the monomer charge.

5. Composition according to claim 4 wherein the composition of the copolymer corresponds with a monomer charge containing an alkyl acrylate with at least 4 carbon atoms in the alkyl group.

6. Composition according to claim 5 wherein the alkyl group comprises butyl, hexyl, octyl or 2-ethyl hexyl acrylate and/or the acrylate comprises a methacrylate.

7. Composition according to any one of the preceding claims wherein the composition of the acrylic copolymer corresponds with from 1 to 40% parts by weight of acrylic monomer in the monomer charge.

8. Composition according to claim 7 wherein the composition of the acrylic copolymer corresponds with from 2 to 20% by weight of acrylic monomer in the monomer charge.

9. Process for the preparation of copolymers of a monomer charge comprising vinyl acetate, vinyl chloride, acrylate and ethylene under superatmospheric pressure wherein the monomer charge is dispersed in an aqueous emulsion and polymerised in the presence of minor amounts of polymerisation promoters and an emulsifier system characterised in that the monomer charge is substantially free from sodium vinyl sulphonate and preferably also from free acrylic acids.

10. Process according to claim 9 wherein the monomer charge further comprises an alkyl acrylate with at least 4 carbon atoms in the alkyl group.

11. Process according to claim 10 wherein the alkyl acrylate corresponds with from 1 to 40% by weight of the monomer charge.

European Patent Office

**EUROPEAN SEARCH REPORT**

Application Number

EP 89 30 2776

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | EP-A-0 255 363 (UNILEVER PLC) * Claims * | 1 | C 08 F 218/08 C 08 F 214/06 // (C 08 F 218/08 C 08 F 214:04 C 08 F 210:02 C 08 F 220:18 ) (C 08 F 214/06 C 08 F 218:08 C 08 F 210:02 C 08 F 220:18 ) |
| A,D | GB-A-1 551 415 (WACKER-CHEMIE GmbH) * Claims * | 1 | |
| A | US-A-3 657 174 (D. GLABISCH et al.) * Example 1 * | 1 | |

TECHNICAL FIELDS SEARCHED (Int. Cl.4)

C 08 F

The present search report has been drawn up for all claims

| Place of search | Date of completion of the search | Examiner |
|---|---|---|
| THE HAGUE | 16-06-1989 | GLIKMAN J-F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)